# EUROPÄISCHE PATENTSCHRIFT

(11) **EP 2 395 216 B1**
(45) Veröffentlichungstag und Bekanntmachung des Hinweises auf die Patenterteilung: **10.07.2013**
(21) Anmeldenummer: 11165224.4
(22) Anmeldetag: 09.05.2011
(51) Int. Cl.: F02D 9/10, F16K 1/22

(54) **Klappenvorrichtung für eine Verbrennungskraftmaschine**
Flap device for a combustion engine
Dispositif de clapets pour un moteur à combustion interne

(30) Priorität: 11.06.2010 DE 102010023412
(43) Veröffentlichungstag der Anmeldung: 14.12.2011
(73) Patentinhaber: Pierburg GmbH, 41460 Neuss (DE)
(72) Erfinder: Langner, Frank, 52146 Würselen (DE)
(74) Vertreter: Patentanwälte ter Smitten Eberlein Rütten Partnerschaftsgesellschaft

(56) Entgegenhaltungen:
- WO-A1-2008/043754
- DE-A1- 19 600 567
- DE-U1- 20 002 784
- US-A1- 2008 149 876

## Beschreibung

Die Erfindung betrifft eine Klappenvorrichtung für eine Verbrennungskraftmaschine mit einem Gehäuse, in dem ein von einem Fluid durchströmbarer Kanal ausgebildet ist, in welchem ein Klappenkörper angeordnet ist, der um eine Drehachse einer Klappenwelle schwenkbar ist, wobei der Klappenkörper mindestens ein Klappenteil aufwiest, über einen Lagerabschnitt auf der Klappenwelle befestigt ist und wobei der Klappenkörper über eine Stellvorrichtung in Drehung versetzbar ist, wodurch das mindestens eine Klappenteil gegen eine Sitzfläche, die durch eine Innenwand des Gehäuses gebildet ist, und von der Sitzfläche weg drehbar ist.

Derartige Klappenvorrichtungen können verschiedene Funktionen in einer Verbrennungskraftmaschine übernehmen. Insbesondere sind hier Drosselklappenstutzen zur Ansaugluftmengenregulierung zu nennen, aber auch Abgasklappen, Kühlerbypässe, Abgasrückführventile oder Saugrohrklappen können derartig aufgebaut sein. In modernen Verbrennungskraftmaschinen wächst dabei ständig die Forderung nach einer möglichst definierten Leckage oder möglichst dichtem Verschluss des fluiddurchströmten Kanals durch den entsprechenden Klappenkörper. Um derartige Anforderungen an die Schließfunktion der Klappenvorrichtung zu erreichen, ist es beispielsweise bekannt, sowohl die Gehäuse und die Klappen, als auch deren Befestigung auf der Wellenachse sehr genau zu bearbeiten. Dies erfordert jedoch einen sehr hohen Herstellungsaufwand und ist somit mit hohen Kosten verbunden.

Entsprechend wird in der DE 20002784 U1 eine Klappenvorrichtung offenbart, bei der die Klappe mittels Schrauben oder Laserschweißen auf der Wellenachse befestigt ist. Diese Klappe soll im vollständig geschlossenen Zustand an der wellenseitig gegenüberliegenden Kanalwandung anliegen und den Kanalquerschnitt verschließen. Um diese Aufgabe zu erfüllen, muss der Klappenkörper bei der Montage auf die Wellenachse sehr genau ausgerichtet werden, um ein vollständiges Verschließen zu garantieren. Eine Ungenauigkeit bei der Ausrichtung des Klappenkörpers in Bezug auf die Wellenachse wird zwangsläufig eine ungewünschte Leckage zwischen Klappenkörper und Kanalinnenwand verursachen.

Daher ist es Aufgabe der Erfindung, eine Klappenvorrichtung zu schaffen, die einerseits einen definierten Verschluss des Kanals durch den Klappenkörper ermöglicht und andererseits einfach und kostengünstig herstellbar ist.

Diese Aufgabe wird dadurch gelöst, dass der Lagerabschnitt zwei Schenkelemente und ein Verbindungselement aufweist, wobei der Lagerabschnitt über die Schenkelelemente mit der Klappenwelle verbunden ist und die Klappenwelle von dem Verbindungselement beabstandet ist. Hierdurch kann der Klappenkörper besonders einfach auf der Wellenachse montiert werden, wobei eine definierte Anlage an einer Sitzfläche gewährleistet bleibt. Es können sowohl dichte Klappenvorrichtungen geschaffen werden, als auch Klappenvorrichtungen, die eine definierte Leckage vorsehen.

Dadurch, dass das mindestens eine Klappenteil ein zur Wellenachse benachbarten Biegebereich und ein sich anschließenden planebenen Flächenbereich aufweist, ist es möglich, den Klappenkörper zumindest teilweise unter einer gewissen Vorspannung an einer Sitzfläche anliegen zu lassen. Hierbei ist es besonders vorteilhaft, wenn der Klappenkörper als Stanz-Biegeteil hergestellt ist.

Um eine definierte Leckage vorzusehen, kann es vorteilhaft sein, dass mindestens eine Sitzfläche in Verbindung mit dem planebenen Flächenbereich des Klappenteils als Labyrinthdichtung ausgebildet ist. Eine besonders einfache und kostengünstige Montage des Klappenkörpers auf der Wellenachse wird dadurch hergestellt, dass die Verbindung zwischen den Schenkelelementen und der Wellenachse eine stoffschlüssige Verbindung wie z.B. eine Laserschweißstelle ist.

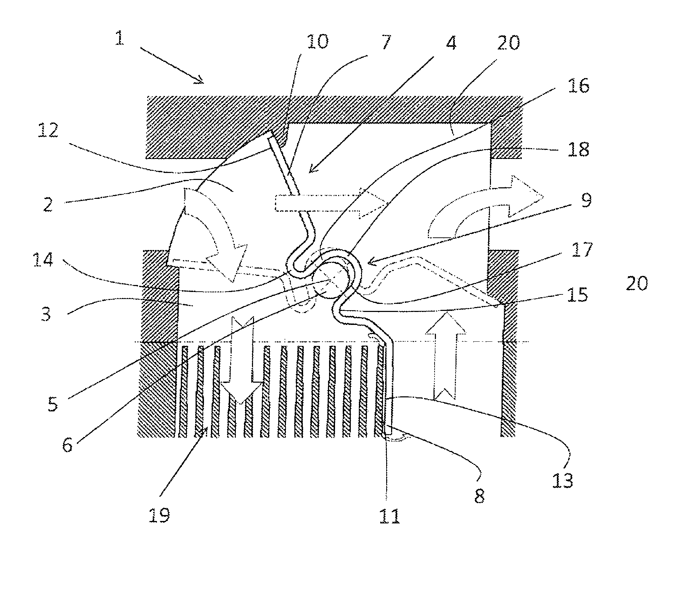

Ein Ausführungsbeispiel einer derartigen Klappenvorrichtung als Bypassklappe in Verbindung mit einer Abgasrückführkühlvorrichtung ist in der Zeichnung dargestellt und wird nachfolgend beschrieben, hierbei zeigt die einzige Figur eine Seitenansicht der erfindungsgemäßen Klappenvorrichtung.

Die Zeichnung zeigt eine Seitenansicht einer erfindungsgemäßen Klappenvorrichtung 1 für eine Verbrennungskraftmaschine, wobei die Klappenvorrichtung 1 im vorliegenden Fall als Bypassklappe einer nicht weiter dargestellten Abgasrückführ-Kühlvorrichtung ausgebildet ist. Die Klappenvorrichtung 1 weist ein Gehäuse 2 auf, das einen von einem Fluid, in diesem Fall Abgas, durchströmbaren Kanal 3 besitzt. Desweiteren weist die Klappenvorrichtung 1 einen Klappenkörper 4 auf, der um eine Drehachse 5 einer Klappenwelle 6 schwenkbar ist. Der Klappenkörper 4 wird durch die Drehachse 5 im Wesentlichen in zwei Klappenteile 7, 8 geteilt und ist über einen Lagerabschnitt 9 drehfest mit der Klappenwelle 6 verbunden. Das Gehäuse 2 weist im Wesentlichen zwei Sitzflächen 10, 11 auf. Im geschlossenen Zustand liegt ein planebener Flächenbereich 12 des Klappenteiles 7 fluiddicht an der Sitzfläche 10 an, während ein planebener Bereich 13 des Klappenteiles 8 von der Sitzfläche 11 beabstandet ist, derart, dass die Sitzfläche 11 mit dem Klappenteil 8 eine Labyrinthdichtung ausbildet. Hierzu entspricht die Sitzfläche in Geometrie und Form dem gegenüberliegenden planebenen Flächenbereich 13 und umgreift diesen an dem von der Klappenwelle 6 abgewandten Ende mit einem definierten Spaltabstand.

Um das Klappenteil 7 unter einer gewissen Vorspannung gegen die Sitzfläche 13 im geschlossenen Zustand der Klappenvorrichtung anliegen zu lassen, und die Flexibilität des Klappenteils 8 zu erhöhen, schließen sich an die planebenen Flächenbereiche in Richtung des Lagerabschnittes 9 die Bereiche 14, 15 an.

Der Lagerabschnitt 9 besteht aus zwei Schenkelelementen 16, 17 sowie ein die Schenkelelemente 16, 17 verbindendes Verbindungselement 18. Der Lagerabschnitt 9 greift mit seinen Schenkelelementen 16, 17 auf die Klappenwelle 6 an, wobei das Verbindungselement 18 von der Klappenwelle 6 beabstandet ist. Auf bekannte Weise sind die Schenkelelemente 16, 17 über Laserschweißverbindungen mit der Klappenwelle 6 verbunden. Es sind aber auch andere Verbindungsarten wie Schreiben, Löten, etc. denkbar. Durch diese besondere Ausführung des Lagerabschnittes 9 ist es möglich, den Klappenkörper 4 auf einfache Weise in der Klappenvorrichtung 1 zu positionieren und die Anlage oder Beabstandung zu den Sitzflächen zu optimieren.

Die Funktionsweise der Klappenvorrichtung 1 ist anhand der eingezeichneten Pfeile leicht nach zu vollziehen. Im dargestellten Zustand der Klappenvorrichtung 1 in einer ersten Position des Klappenkörpers 4 tritt Abgas in den Kanal 3 ein und wird durch eine Kühlvorrichtung 19 geführt und als gekühltes Abgas zum Auslass 20 der Klappenvorrichtung 1 und danach zur Brennkraftmaschine zurück geführt. In dieser ersten Position ist durch die Ausführung der Sitzfläche 11 in Verbindung mit dem Klappenteil 13 als Labyrinthdichtung eine definierte Leckage vorgesehen, die ebenfalls durch Pfeile gekennzeichnet ist. In einer zweiten Position des Klappenkörpers 4 der Klappenvorrichtung 1 wird heißes Abgas an der Kühlvorrichtung 19 vorbei direkt zum Ventilauslass 20 geleitet. Auf besonders einfache und günstige Weise ist der Klappenkörper 4 herstellbar, wenn er als Stanz-Biegeteil ausgeführt ist. Für eine optimale Funktion der erfindungsgemäßen Klappenvorrichtung 1 sollte der eingeschlossene Winkel zwischen den jeweiligen Schenkelelementen und Klappenteilen zwischen 30° und 150° betragen.

## Patentansprüche

1. Klappenvorrichtung (1) für eine Verbrennungskraftmaschine mit einem Gehäuse (2), in dem ein von einem Fluid durchströmbarer Kanal (3) ausgebildet ist, in welchem ein Klappenkörper (4) angeordnet ist, der um eine Drehachse (5) einer Klappenwelle (6) schenkbar ist, wobei der Kiappenkörper (4) mindestens ein Klappenteil (7, 8) aufwiest, über einen Lagerabschnitt (9) auf der Klappenwelle (6) befestigt ist und wobei der Klappenkörper (4) über eine Steilvorrichtung in Drehung versetzbar ist, wodurch das mindestens eine Klappenteil (7, 8) gegen eine Sitzfläche (10, 11), die durch eine Innenwand des Gehäuses (2) gebildet ist, und von der Sitzfläche (10, 11) weg drehbar ist, wobei der Lagerabschnitt (9) zwei Schenkelemente (16, 17) und ein Verbindungselement (18) aufweist, **dadurch gekennzeichnet, dass** der Lagerabschnitt (9) über die Schenkelelemente (16, 17) mit der Klappenwelle (6) verbunden ist und die Klappenwelle (6) von dem Verbindungselement (18) beabstandet ist.

2. Klappenvorrichtung nach Anspruch 1, **dadurch gekennzeichnet, dass** mindestens eine Klappenteil (7, 8) einen zur Klappenwelle (6) benachbarten Biegebereich (14, 15) und einen sich anschließenden planebenen Flächenbereich (12, 13) aufweist.

3. Klappenvorrichtung nach Anspruch 1 oder 2, **dadurch gekennzeichnet, dass** der Klappenkörper (4) als Stanz-Biegeteil hergestellt ist.

4. Klappenvorrichtung nach Anspruch 2 oder 3, **dadurch gekennzeichnet, dass** mindestens eine Sitzfläche (10, 11) in Verbindung mit dem planebenen Flächenbereich (12, 13) des Klappenteils als Labyrinthdichtung ausgebildet ist.

5. Klappenvorrichtung nach einem der vorhergehenden Ansprüche, **dadurch gekennzeichnet, dass** die Verbindung zwischen den Schenkelelementen (16, 17) und der Klappenwelle (6) eine stoffschlüssige Verbindung ist.

## Claims

1. A flap device (1) for an internal combustion engine, comprising a housing (2) in which a duct (3) is formed that is adapted to be flown through by a fluid, in which duct a flap body (4) is arranged which is pivotable about a rotary axis (5) of a flap shaft (6), wherein the flap body (4) comprises at least one flap portion (7, 8) which is fastened on the flap shaft (6) via a support section (9), and wherein the flap body (4) is adapted to be rotated via an actuator device, whereby the at least one flap portion (7, 8) can be pivoted against a seat surface (10, 11) formed by an inner wall of the housing (2), and away from the seat surface (10, 11), wherein the support section (9) comprises two leg elements (16, 17) and a connecting element (18), **characterized in that** the support section (9) is connected with the flap shaft (6) via the leg elements (16, 17), and the flap shaft (6) is spaced from the connecting element (18).

2. The flap device of claim 1, **characterized in that** at least one flap portion (7, 8) comprises a bent portion (14, 15) adjacent the flap shaft (6) and an adjoining planar surface portion (12, 13).

3. The flap device of claim 1 or 2, **characterized in that** the flap body (4) is made as a stamped and bent part.

4. The flap device of claim 2 or 3, **characterized in that** at least one seat surface (10, 11) is formed as a labyrinth seal in combination with the planar surface portion (12, 13) of the flap portion.

5. The flap device of one of the preceding claims, **characterized in that** the connection between the leg elements (16, 17) and the flap shaft (6) is a material bond connection.

## Revendications

1. Dispositif à clapet (1) pour un moteur à combustion interne, avec un boitier (2) dans lequel est formé un conduit (3) apte à être traversé par un fluide, dans lequel conduit est formé un corps de clapet (4) pivotable autour d'un axe de rotation (5) d'un arbre de clapet (6), ledit corps de clapet (4) comportant au moins une partie de clapet (7, 8) fixée sur ledit arbre de clapet (6) par une section de palier (9), et ledit corps de clapet (4) pouvant être mis en rotation par un actionneur, de sorte que ladite au moins une partie de clapet (7, 8) peut être pivoté contre une surface de siège (10, 11), formée par une paroi interne du boitier (2), et s'éloigner de ladite surface de siège (10, 11), ladite section de palier (9) comportant deux éléments de branche (16, 17) et un élément de jonction (18), **caractérisé en ce que** ladite section de palier (9) est liée avec ledit arbre de clapet (6) par lesdits élément de branche (16, 17), et ledit arbre de clapet (6) est écarté dudit élément de jonction (18).

2. Dispositif à clapet selon la revendication 1, **caractérisé en ce que** ladite au moins une parte de clapet (7, 8) comporte une zone courbée (14, 15) adjacente audit arbre de clapet (6), et une partie étendue (12, 13) plane adjacente.

3. Dispositif à clapet selon la revendication 1 ou 2, **caractérisé en ce que** ledit corps de clapet (4) est fabriqué sous forme d'une pièce découpée pliée.

4. Dispositif à clapet selon la revendication 2 ou 3, **caractérisé en ce qu'**en combinaison avec ladite partie étendue (12, 13) plane, au moins une surface de siège (10, 11) est réalisée comme un joint à labyrinthe.

5. Dispositif à clapet selon l'une quelconque des revendications précédentes, **caractérisé en ce que** la liaison entre les éléments de branches (16, 17) et ledit arbre de clapet (6) est une liaison de matière.
